# EUROPÄISCHE PATENTANMELDUNG

(11) **EP 3 409 408 A1**
(43) Veröffentlichungstag der Anmeldung: **05.12.2018**
(21) Anmeldenummer: 18174241.2
(22) Anmeldetag: 25.05.2018
(51) Int. Cl.: B23K 26/08, B23K 26/402, B29C 65/00, B23K 26/0622, B23K 26/36, B29B 13/08, B08B 7/00

(54) **VERFAHREN, VORRICHTUNG UND COMPUTERPROGRAMMELEMENT ZUM REINIGEN VON FASERVERSTÄRKTEN POLYMEREN MITTELS LASERSTRAHLUNG**

(30) Priorität: 29.05.2017 DE 102017111658
(71) Anmelder: Airbus Defence and Space GmbH, 82024 Taufkirchen (DE)
(72) Erfinder: Rauh, Benedikt, 81827 München (DE); Fietzek, Heiko, 83233 Bernau am Chiemsee (DE)
(74) Vertreter: LKGLOBAL Lorenz & Kopf PartG mbB Patentanwälte

(57) **Zusammenfassung**

Die vorliegende Erfindung befasst sich mit einem Verfahren (100) und einer Vorrichtung (200) zum Reinigen einer Oberfläche eines Faserverbundwerkstoffs, beispielsweise eines faserverstärkten Polymers. In einem Schritt (104) wird Laserlicht (225) aus einer Laserstrahlquelle (220) in eine oberste, Verunreinigungen aufweisende, Schicht (310) des faserverstärkten Polymers (300) eingestrahlt. Die Laserstrahlquelle (220) ist dazu ausgeführt, einen Laserstrahl an einer ersten Position auf eine erste bestrahlte Fläche mit einer Energiedichte von 0,01 J/cm² bis 2,5 J/cm² zu emittieren. In einem weiteren Schritt (106) wird die Laserstrahlquelle (220) zu einer zweiten, von der ersten Position abweichenden Position bewegt. Anschließend wird das Einstrahlen von Laserlicht (225) auf eine zweite bestrahlte Fläche wiederholt, wobei die zweite bestrahlte Fläche mit Bezug zu der ersten bestrahlten Fläche versetzt ist. In einem nächsten Schritt (108) wird das Bewegen der Laserstrahlquelle (220) und das Einstrahlen von Laserlicht (225) wiederholt, wobei die Laserstrahlquelle (220) zu einer weiteren Position, welche zu einer unmittelbar vorangehenden Position versetzt ist, bewegt wird, so dass ein Punkt einer Oberfläche des Polymers in mehreren aufeinanderfolgenden einzelnen Einstrahlvorgängen des Laserlichts (225) innerhalb der jeweils bestrahlten Fläche liegt.

## Beschreibung

### GEBIET DER ERFINDUNG

Die vorliegende Erfindung befasst sich mit dem Reinigen von faserverstärkten Polymeren, insbesondere mit einer Oberflächenschicht eines faserverstärkten Polymers und betrifft insbesondere ein Verfahren zum Reinigen von faserverstärkten Polymeren mittels Laserstrahlung und eine Vorrichtung zum Emittieren eines Laserstrahls.

### HINTERGRUND DER ERFINDUNG

Faserverbundwerkstoffe bzw. Faserverbundschichten werden bevorzugt im Leichtbau eingesetzt, beispielsweise beim Bau von Luft- und Raumfahrzeugen. Die Faserverbundwerkstoffe werden in einer Form gefertigt und es kann insbesondere vorgesehen sein, dass die gefertigten Bauteile weiteren Nachbearbeitungsschritten zugeführt werden. Ein solcher, weiterer Nachbearbeitungsschritt kann vorsehen, dass zwei Bauteile miteinander verklebt werden, um beispielsweise ein größeres Bauteil für ein zu fertigendes Luft- oder Raumfahrzeug oder eine Komponente hiervon in integraler Bauweise bereitzustellen.

Beim Herstellen von Faserverbundwerkstücken hat sich gezeigt, dass beim Fügen zweier solcher Werkstücke der Scherbelastungswiderstand der Fügestelle niedriger als gewünscht sein kann und dementsprechend die Fügestelle eine Schwachstelle im, sich im Einsatz befindlichen, Bauteil darstellen kann. Üblicherweise werden bei der Herstellung einzelner, zu fügender Werkstücke, Trennmittel eingesetzt um eine einfache Entnahme des Werkstücks aus dem Werkzeug zu ermöglichen, indem eine Haftung des Rohlings, also des gefertigten Werkstücks, mit der Werkzeugoberfläche herabgesetzt wird. Dieses Trennmittel verbleibt nach der Entnahme zum Teil auf der Werkzeugoberfläche und zum Teil in Form unerwünschter Verunreinigungen innerhalb der, mit der Werkzeugoberfläche in Kontakt stehenden Werkstückoberfläche.

Die Menge der Verunreinigungen des Werkstücks, insbesondere in Form von Trennmittel, kann die Qualität der Fügestelle nachteilig beeinflussen. Um die Oberflächengüte zu erhöhen und eine bessere Verbindung zu gewährleisten wird ein möglichst geringer Anteil von Trennmittelrückständen auf dem gefertigten Werkstück angestrebt. Hierfür wird die Werkstückoberfläche teilweise zusätzlich abgeschliffen, um die Trennmittelrückstände zu entfernen. Es hat sich jedoch gezeigt, dass es bei diesem Vorgang zur Beschädigung von oberflächennahen Fasern kommen kann, wenn zu viel Material von der Oberfläche des Werkstücks abgetragen wird. Dies kann einen Abfall der Festigkeit im gefertigten Werkstück zur Folge haben. Andererseits kann es sein, dass nicht entfernte und auf der Werkstückoberfläche verbliebene Mengen von Trennmittel die Qualität der Fügestelle nachteilig beeinflusst, wenn das Trennmittel nicht bis zu einem gewissen Grad von der Werkstückoberfläche entfernt wird.

Insbesondere im Leichtbau, wo möglichst geringe Materialdicken bei maximaler Festigkeit angestrebt werden, kann es schwierig sein, den richtigen Mittelweg zu finden zwischen der Materialdicke des gefertigten Werkstücks einerseits (um überhaupt die Verwendung eines abtragenden Verfahrens zu ermöglichen, da hierbei immer etwas Material von der Werkstückoberfläche mit abgetragen wird; dies betrifft die Festigkeit der Werkstücke als solche) und einem geeigneten Verfahren zum Abtragen des Trennmittels andererseits (um möglichst viel von dem zurückgebliebenen Trennmittel abzutragen, damit die Füge- bzw. Klebestelle hiervon nicht nachteilig beeinflusst wird; dies betrifft die Güte der Klebung).

### ZUSAMMENFASSUNG DER ERFINDUNG

Eine Aufgabe der vorliegenden Erfindung besteht daher darin, die Festigkeit einer Komponente zu erhöhen, die durch Fügen, insbesondere Kleben von zwei oder mehr Faserverbundwerkstoffen gefertigt ist.

Diese Aufgabe wird durch das Verfahren und die Vorrichtung gemäß den unabhängigen Ansprüchen erreicht. Weitere Ausführungsformen ergeben sich aus den abhängigen Ansprüchen und aus der folgenden Beschreibung. Es sei darauf hingewiesen, dass die folgenden beschriebenen Aspekte für das Verfahren und für die Vorrichtung zutreffen. Schritte, die im Zusammenhang mit dem Verfahren beschrieben sind, können als funktionale Merkmale der Vorrichtung implementiert werden und umgekehrt.
Gemäß einem ersten Aspekt der Erfindung ist ein Verfahren zum Reinigen von Faserverbundwerkstoffen, insbesondere von faserverstärkten Polymeren, mittels Laserstrahlung vorgesehen. Das Verfahren weist die folgenden Schritte auf: In einem Schritt wird Laserlicht aus einer Laserstrahlquelle in eine oberste, Verunreinigungen aufweisende, Schicht des faserverstärkten Polymers eingestrahlt. Die Laserstrahlquelle ist dazu ausgeführt, einen Laserstrahl an einer ersten Position auf eine erste bestrahlte Fläche mit einer Energiedichte von 0,01 J/cm² bis 2,5 J/cm² zu emittieren. In einem weiteren Schritt wird die Laserstrahlquelle zu einer zweiten, von der ersten Position abweichenden Position bewegt. Anschließend wird das Einstrahlen von Laserlicht auf eine zweite bestrahlte Fläche wiederholt, wobei die zweite bestrahlte Fläche mit Bezug zu der ersten bestrahlten Fläche versetzt ist. In einem nächsten Schritt wird das Bewegen der Laserstrahlquelle und das Einstrahlen von Laserlicht wiederholt, wobei die Laserstrahlquelle zu einer weiteren Position, welche zu einer unmittelbar vorangehenden Position versetzt ist, bewegt wird, so dass ein Punkt einer Oberfläche des Polymers in mehreren aufeinanderfolgenden einzelnen Einstrahlvorgängen des Laserlichts innerhalb der jeweils bestrahlten Fläche liegt.

Durch das mehrmalige Einbringen der durch den Laser emittierten Energie auf einen Punkt der Oberfläche des faserverstärkten Polymers kommt es zum Abplatzen der Verunreinigungen aufweisenden Schicht. Dies liegt daran, dass die Verunreinigungen aufweisende Schicht das Laserlicht größtenteils transmittiert und somit erst bei Erreichen des nicht verunreinigten, das Laserlicht absorbierenden Polymers, der Energieeintrag in das Werkstück (>90%) stattfindet.

Der Energieeintrag in das Werkstück wird durch die Wahl der Parameter so eingestellt bzw. erreicht, dass bevorzugt eine Schichtdicke von bis zu 300 nm von der Oberfläche des Werkstücks abgetragen wird. Durch diese Nachbehandlung ist die Oberflächengüte deutlich erhöht und weist bessere Adhäsionseigenschaften zum Verkleben mit einem anderen Werkstück auf, da das Trennmittel entweder an der Oberfläche des Werkstücks anhaftet oder darin eindringt.

Ein wichtiger Effekt ist, dass durch die nur sehr oberflächennahe Behandlung des Werkstücks die Fasern weitestgehend unbeschädigt bleiben, im Gegensatz zu einer Oberflächenbehandlung durch Schleifen, bei der das Risiko einer Beschädigung einer oberflächennahen Faser deutlich höher ist, da die Menge des Materialabtrags nur schwer vorgebbar bzw. einstellbar ist. Dadurch können bis zu 100% höhere Scherfestigkeiten bei einer Klebeverbindung erreicht werden, da sowohl das Trennmittel im Wesentlichen vollständig abgetragen wird als auch Beschädigungen der Fasern des Werkstücks vermieden werden.

Das hierin beschriebene Verfahren eignet sich für sämtliche Faserverbundwerkstoffe, insbesondere Polymere (Matrixmaterial) wie Duro- als auch Thermoplasten. Es ist auch denkbar, dass Elastomere derart bearbeitet werden können.

Bei dem hier beschriebenen Verfahren wird eine obere oder äußere Schicht des Werkstücks abgetragen. Diese obere Schicht ist derjenige Bereich des Werkstücks, welcher während zumindest eines Herstellungsschrittes mit Trennmittel verunreinigt worden ist. Das Trennmittel wird daher mittelbar abgetragen, indem die obere Schicht des Werkstücks mittels eines Lasers abgetragen wird. Das hier beschriebene Verfahren in Verbindung mit den besonderen Parametern des Laserlichts ermöglichen es, dass möglichst wenig Material des Werkstücks von der verunreinigten Oberfläche abgetragen wird, so dass die Fasern des Werkstücks durch den Materialabtrag nicht freigelegt und/oder beschädigt werden. Dennoch wird das Trennmittel im Wesentlichen vollständig abgetragen, so dass die Güte einer Klebeverbindung sehr hoch ist.

Die Begriffe Faserverbundwerkstoff und faserverstärktes Polymer werden im Kontext dieser Anmeldung als Synonyme verwendet und auch mit dem Begriff des Werkstücks bezeichnet. Grundsätzlich ist hierunter ein aus mehreren Materialen zusammengesetztes Werkstück zu verstehen, welches ein Fasermaterial oder eine Vielzahl von Fasern aufweist, das bzw. welche in einem aushärtbaren und formbaren Material, also einem Harz oder Kunststoff, eingebettet sind. Das aushärtbare Material umgibt bzw. enthält die Fasern. Je nach Lage, Anzahl und Orientierung der Fasern (und natürlich in Abhängigkeit des umgebenden, aushärtbaren Materials) können die Eigenschaften des Werkstücks beeinflusst werden.

Die Trennmittel können unter anderem auf den Hauptbestandteilen Polydimethylsiloxane (PDMS) oder Ethylen-Tetrafluorethylen-Copolymere oder deren Reaktionsprodukten mit weiteren Edukten basieren. Die tolerierbare Restmenge nach der Laservorbehandlung kann vorzugsweise bei unter 1.5 at. % liegen. Es sind aber auch höhere oder niedrigere tolerierbare Restmengen denkbar. Die Atomprozent der tolerierbaren Restmenge kann insbesondere bestimmt werden, indem hierfür jene Atome herangezogen werden, welches als Hauptbestandteil des Trennmittels auf der Oberfläche vorliegt. Bei PDMS ist dies beispielsweise Silizium (Si).

Die Wahl der Energiedichte des Laserstrahls und der Anzahl der Wiederholungen des Einstrahlvorgangs erfolgt insbesondere so, dass die obere Schicht des Werkstücks einen Großteil der Laserenergie transmittiert. Diese Transmission ist das Ergebnis der Verunreinigung der oberen Schicht mit Trennmittel. Sobald das Laserlicht auf Material trifft, welches nicht mit Trennmittel verunreinigt ist, wird es nicht mehr transmittiert und trägt Energie an dieser Stelle ein, also möglichst nahe an der Oberfläche des Werkstücks, allerdings unterhalb der verunreinigten Oberflächenschicht. Durch den Energieeintrag wird das Werkstück örtlich begrenzt erhitzt, wodurch die verunreinigte Oberflächenschicht abplatzt oder abgetragen wird. Man spricht bei diesem physikalischen Phänomen auch von Sublimation, d.h. von einem Phasenübergang von einem festen in einen gasförmigen Aggregatszustand, ohne dass es zu einer Verflüssigung kommt. Erreicht der entstehende Dampfdruck einen kritischen Wert, kommt es zum erwähnten Abplatzen der obersten Schicht.

Die Energiedichte ist die Energiedichte pro einzelnem Einstrahlvorgang und kann aus einem der folgenden Bereiche ausgewählt werden (jeweils in der Einheit J/cm²): 0,01 - 2,5; 0,01 - 2,2; 0,01 - 2,0; 0,01 - 1,8; 0,01 - 1,6; 0,01 - 1,4; 0,01 - 1,2; 0,01 - 1,0; 0,01 - 0,8; 0,01 - 0,6; 0,01 - 0,5; 0,01 - 0,4; 0,01 - 0,3; 0,01 - 0,2; 0,01 - 0,15; 0,05 - 0,15; 0,07 - 0,15; 0,1 - 0,15; 0,12 - 0,15. Bevorzugt beträgt die Energiedichte 0,15 J/cm².

Je nach Grad der Verunreinigung des Werkstücks bzw. der Oberfläche des Werkstücks mit Trennmittel kann die Anzahl der Einstrahlvorgänge auf einen Punkt einer Oberfläche des Polymers durch die Wahl der Abstände (oder durch die Wahl einer Bewegungsgeschwindigkeit in Versatzrichtung) zwischen zwei zumindest teilweise überlappenden bestrahlten Flächen erhöht oder reduziert werden.

Die Anzahl der Einstrahlvorgänge auf einen Punkt kann aus den folgenden Bereichen ausgewählt werden: 2 - 150; 2 - 140; 2 - 130; 2 - 120; 2 - 110; 2 - 100; 2 - 90; 2 - 85; 2 - 80; 2 - 75; 2 - 70; 3 - 70; 4 - 70; 5 - 70; 6 - 70; 7 - 70; 8 - 70; 9 - 70; 10 - 70; 15 - 70; 20 - 70; 25 - 70; 30 - 70; 35 - 70; 40 - 70; 45 - 70; 50 - 70; 55 - 70; 60 - 70; 65 - 70.

Bevorzugt wird ein Punkt der Oberfläche des Polymers durch insgesamt 70 Einstrahlvorgänge bestrahlt. Ein Teil dieser Einstrahlvorgänge kann unmittelbar aufeinander folgen und ein weiterer Teil kann zeitlich beabstandet von dem ersten Teil der Einstrahlvorgänge sein. Beispielsweise kann ein Punkt zunächst zehnmal hintereinander bestrahlt werden, sodann von mehreren Einstrahlvorgängen nicht getroffen werden, und dann erneut zehnmal getroffen werden. Dieser Vorgang wiederholt sich durch das Einstrahlmuster des Lasers auf das Werkstück so, dass ein Punkt insgesamt so oft getroffen wird, wie dies vorgegeben oder gewünscht ist.

Bevorzugt erfolgt der Versatz bzw. die Bewegung des Lasers nach einem beendeten Einstrahlvorgang und vor Beginn des nächsten Einstrahlvorgangs nur soweit, dass ein Punkt trotz Bewegung des Lasers von einer Vielzahl von Wiederholungen des Einstrahlvorgangs getroffen wird.

Bevorzugt wird das Werkstück zeilenweise mit dem Laser abgefahren, wobei zwei aufeinanderfolgende Einstrahlvorgänge in einer Zeile seitlich (horizontal) versetzt sind. Sobald in einer Zeile ein seitlicher Rand des Werkstücks erreicht ist, wird der Laser senkrecht zu dem Zeilenverlauf verschoben (also vertikal) und die nächste Zeile wird abgefahren. Bei der vertikalen Verschiebung gelten die gleichen Grundsätze wie bei der horizontalen Verschiebung des Lasers. Das bedeutet, dass die zweite Zeile mit Bezug zu der ersten Zeile um weniger als eine vertikale Zeilenausdehnung (eine vertikale Ausdehnung der bestrahlten Fläche) verschoben wird.

In Summe wird daher ein Punkt der Oberfläche sowohl in der ersten Zeile wie auch in darauffolgenden Zeilen (einer oder mehreren) bestrahlt.

Die wiederholte Bestrahlung eines Punktes der Oberfläche ermöglicht es, die Energiedichte des Laserlichts (also eines einzelnen Pulses) zu reduzieren, um den Materialabtrag durch die Anzahl der Wiederholungen der Einstrahlung dosieren zu können. Dies kann ungewollte Materialbeschädigungen durch eine zu hohe Energiedichte vermeiden und dazu beitragen, die Dicke der abgetragenen Schicht so gering wie möglich zu halten.

Bevorzugt sind die Bewegung des Lasers und die Einstrahlvorgänge so aufeinander abgestimmt, dass zunächst die Bewegung und, sobald der Laser zum Stillstand gekommen ist, ein Einstrahlvorgang initiiert wird. Nachdem der Einstrahlvorgang beendet ist, wird der Laser erneut bewegt.

Als Alternative können das Bewegen der Laserstrahlquelle und das Initiieren der Einstrahlvorgänge so aufeinander abgestimmt sein, dass die Laserstrahlquelle an eine zu bestrahlende Position bewegt wird und dann eine Vielzahl von Einstrahlvorgängen auf dieselbe Position abgesetzt wird. Hierbei kann die Anzahl der Einstrahlvorgänge den oben angegebenen Bereichen für die Anzahl von Wiederholungen entsprechen, jedoch mit dem Unterschied, dass nicht zwischen jedem Einstrahlvorgang eine Bewegung des Lasers erfolgt. Anschließend wird die Laserstrahlquelle über eine zweite, von der ersten abweichende, Position des faserverstärkten Polymers bewegt, und der Einstrahlvorgang wird hierüber erneut wiederholt.

Der Einstrahlvorgang des Laserlichts wird in dieser Alternative auf dieselbe Position des Werkstücks wiederholt.

Der Schritt des Einstrahlens von Laserlicht an der ersten Position kann mehrere einzelne Einstrahlvorgänge oder auch nur einen einzelnen Einstrahlvorgang vorsehen. Nach einem oder mehreren einzelnen Einstrahlvorgängen, also nach dem Schritt des Einstrahlens an der ersten Position, wird die Laserstrahlquelle zu einer zweiten Position bewegt, an welcher der Schritt des Einstrahlens wiederholt wird. In anderen Worten können also mehrere einzelne Einstrahlvorgänge an derselben Stelle abgesetzt werden und dieselbe Fläche mehrfach nacheinander bestrahlen. Es ist aber auch möglich, dass die Laserstrahlquelle jeweils nach einem einzelnen Einstrahlvorgang bewegt wird.

In einem Beispiel überlappt die zweite bestrahlte Fläche die erste bestrahlte Fläche zumindest teilweise und die an der weiteren Position bestrahlte Fläche überlappt die an der unmittelbar vorangehenden Position bestrahlte Fläche ebenfalls zumindest teilweise. In Kombination damit, dass der Schritt des Einstrahlens von Laserstrahlen einen oder mehrere einzelne Einstrahlvorgänge enthalten kann, bedeutet dies, dass beispielsweise nach jedem einzelnen Einstrahlvorgang die Laserstrahlquelle (teilweise) bewegt werden kann und sich nacheinander bestrahlte Flächen teilweise überlappen, oder dass zunächst mehrere einzelne Einstrahlvorgänge auf dieselbe Fläche gerichtet werden, und die Laserstrahlquelle danach bewegt wird, wo das mehrfache Einstrahlen dann wiederholt wird. Im letzteren Fall kann die Laserstrahlquelle so bewegt werden, dass die nach dem Bewegen bestrahlte Fläche an die vor dem Bewegen angestrahlte Fläche grenzt, bevorzugt unmittelbar daran grenzt, um eine durchgehende Bestrahlung der Oberfläche des Werkstücks zu ermöglichen.

Jedenfalls wird bei beiden Vorgehendweisen ermöglicht, dass ein Punkt an der Oberfläche des Werkstücks mehrfach bestrahlt wird. Bei der Variante, in welcher die Laserstrahlquelle nach jedem einzelnen Einstrahlvorgang bewegt wird, kann es sein, dass in einem Randbereich des Werkstücks die Punkte der Oberfläche weniger Einstrahlvorgängen ausgesetzt sind.

In einem Beispiel wird das Laserlicht mit einer Wellenlänge von 150 nm bis 320 nm in das Werkstück eingestrahlt. Die Wellenlänge kann in Abhängigkeit des Trennmittels so gewählt werden, dass das Laserlicht von der mit Trennmittel verunreinigten oberen Materialschicht des Werkstücks transmittiert wird und der Energieeintrag in die nicht verunreinigten Materialschichten erfolgt.

Das Laserlicht kann bevorzugt aus einem der folgenden Wellenlängenbereiche (jeweils in nm) ausgewählt werden: 150 - 320; 150 - 310; 150 - 300; 150- 295; 150- 290; 150- 285; 150- 280; 150- 275; 150- 270; 150- 266; 150- 250; 160- 250; 170- 250; 180- 250; 190- 250; 200- 250; 210- 250; 220- 250; 230- 250. Bevorzugt ist das Laserlicht aus dem Wellenlängenbereich (in nm) 240 - 250, 260 - 270 oder 305 - 310, insbesondere 308, ausgewählt.

In einem Beispiel erfolgt das Einstrahlen des Laserlichts gepulst mit einer Frequenz von 50 Hz bis 30 kHz. Das bedeutet, dass mit dieser Frequenz jeweils ein Laserpuls abgesetzt wird.

Das Laserlicht kann bevorzugt in den folgenden Frequenzbereichen (jeweils in Hz) eingestrahlt werden: 50 - 30.000; 100 - 30.000; 200 - 30.000; 300 - 30.000; 400 - 30.000; 500 - 30.000; 1.000 - 30.000; 1.500 - 30.000; 2.000 - 30.000; 2.500 - 30.000; 3.000 - 30.000; 3.500 - 30.000; 4.000 - 30.000; 4.500 - 30.000; 5.000 - 30.000; 6.000 - 30.000; 7.000 - 30.000; 8.000 - 30.000; 9.000 - 30.000; 10.000 - 30.000; im Folgenden werden die Frequenzbereiche in kHz angegeben: 11 - 30; 12 - 30; 13 - 30; 14 - 30; 15 - 30; 16 - 30; 17 - 30; 18 - 30; 19 - 30; 20 - 30; 21 - 30; 22 - 30; 23 - 30; 24 - 30; 25 - 30; 26 - 30; 27 - 30; 28 - 30; 29 - 30.

In einem Beispiel weist ein einzelner Einstrahlvorgang des Laserstrahls (also ein Laserpuls) eine Dauer von bis zu 20 ns auf. Ein Laserpuls kann auch kürzer sein, also eine Dauer (jeweils in ns) von 5 - 20; 6 - 20; 7 - 20; 8 - 20; 9 - 20; 10 - 20; 10 - 19; 10 - 18; 10 - 17; 10 - 16; 10 - 15 haben.

In Zusammenschau der oben genannten Frequenzbereiche und der Laserpulsdauer ergibt sich, dass eine Zeitspanne zwischen zwei Laserpulsen auch durchaus größer sein kann, als die Dauer eines Laserpulses.

In einem Beispiel wird der Punkt der Oberfläche des Polymers in mehreren aufeinanderfolgenden Einstrahlvorgängen des Laserlichts insgesamt zwischen 50 und 90 mal von dem Laserlicht bestrahlt. Bevorzugt wird die Bewegung der Laserstrahlquelle und die Größe der bestrahlten Fläche auf dem zu reinigenden Werkstück so gewählt, dass ein Punkt in 70 aufeinander folgenden Einstrahlvorgängen bestrahlt wird.

In einem Beispiel wird das Laserlicht mehrfach auf die erste Position eingestrahlt, bevor die Laserstrahlquelle von der ersten Position zu der zweiten Position bewegt wird.

In diesem Beispiel erfolgt das Wiederholen des Einstrahlvorgangs des Laserlichts über der ersten Position des faserverstärkten Polymers. Diese erste Position kann auch als Spot bezeichnet werden. In anderen Worten wird also in diesem Beispiel die Laserstrahlquelle relativ zu dem bearbeiteten bzw. zu reinigenden Werkstück für die Dauer zumindest einer Wiederholung nicht bewegt, bevor die zweite Position angefahren wird. Die Laserstrahlquelle wird an die gewünschte und zu behandelnde Position des Werkstücks bewegt, sodann wird der Laserpuls mit ausgewählten oder vorgegebenen Parametern in Richtung des Werkstücks emittiert und anschließend wird der Laserstrahl an den nächsten zu reinigenden Punkt des Werkstücks bewegt.

Die Dauer der Wiederholungen, welche ohne Bewegung der Laserstrahlquelle emittiert werden, kann beispielsweise im Vorfeld einheitlich für jeden Spot des Werkstücks festgelegt werden, d.h. dass jeder Spot auf dem Werkstück dieselbe Anzahl von Laserpulsen erfährt. Alternativ ist denkbar, dass die Anzahl der Laserpulse pro Spot variiert, beispielsweise in Abhängigkeit des Verschmutzungsgrads, wobei eine höhere Verschmutzung grundsätzlich eine höhere Anzahl von Laserpulsen erfordert.

Das Werkstück kann Punkt für Punkt gereinigt werden. Der Abstand zwischen den Punkten kann variieren oder fest vorgegeben sein. Dieser Abstand kann insbesondere ein Ergebnis der Parameter (Energiedichte, Wellenlänge, Frequenz, Dauer, Wiederholungen) des Laserstrahls bzw. des Laserpulses sein. Die Oberfläche des Werkstücks kann wie eine Matrix in Punkte aufgeteilt werden, die in mehreren Reihen und Spalten angeordnet sein können. Dabei können die Punkte reihenweise oder auch spaltenweise nacheinander angefahren und gereinigt werden. Es sind jedoch auch andere Reihenfolgen denkbar, beispielweise eine unregelmäßige Bewegung, bei der mindestens ein Punkt zwischen einem behandelten Punkt und dem nächsten zu behandelnden Punkt liegt. Dies kann den Vorteil haben, dass zwei unmittelbar nacheinander behandelte Punkte einen gewissen Abstand (dieser kann in Punkten angegeben werden) voneinander haben, um eine zu starke Belastung des Werkstücks an einem Ort zu vermeiden.

Weiterhin ist denkbar, dass eine Überwachungsanordnung den Verschmutzungsgrad und die Art der Verschmutzung der oberen Schicht des Werkstücks erfasst und in Abhängigkeit hiervon die Anzahl der Laserpulse (wie auch die Auswahl der Energiedichte, der Wellenlänge, der Frequenz und der Pulsdauer) einstellt.

Letztlich ist auch denkbar, dass die Überwachungsanordnung das Ergebnis der Bearbeitung überwacht und in Abhängigkeit hiervon die Behandlung wiederholt, falls das erzielte Ergebnis der Behandlung nicht den Vorgaben für die Reinheit des Werkstücks entspricht. In anderen Worten erfolgt hier also eine Regelung des Reinigungsvorgangs.

In einem Beispiel weist das Verfahren einen weiteren Schritt auf. In diesem Schritt werden die Energiedichte und die Anzahl der Wiederholungen des Einstrahlvorgangs des Laserlichts in Abhängigkeit eines Verunreinigungsgrads der obersten, Verunreinigungen aufweisenden, Schicht des faserverstärkten Polymers bestimmt.

Gemäß einem zweiten Aspekt der Erfindung ist eine Vorrichtung zum Emittieren eines Laserstrahls vorgesehen. Die Vorrichtung weist eine Steuereinheit und eine Laserstrahlquelle auf. Die Steuereinheit ist dazu ausgeführt ist, die Laserstrahlquelle anzusteuern um folgende Schritte durchzuführen:
Einstrahlen von Laserlicht aus einer Laserstrahlquelle in eine oberste, Verunreinigungen aufweisende, Schicht des faserverstärkten Polymers, wobei die Laserstrahlquelle dazu ausgeführt ist, einen Laserstrahl an einer ersten Position auf eine erste bestrahlte Fläche mit einer Energiedichte von 0,01 J/cm² bis 2,5 J/cm² zu emittieren;
Bewegen der Laserstrahlquelle zu einer zweiten, von der ersten Position abweichenden Position und Wiederholen des Einstrahlens von Laserlicht auf eine zweite bestrahlte Fläche, wobei die zweite bestrahlte Fläche mit Bezug zu der ersten bestrahlten Fläche versetzt ist;
Wiederholen des Bewegens der Laserstrahlquelle und des Einstrahlens von Laserlicht, wobei die Laserstrahlquelle zu einer weiteren Position, welche zu einer unmittelbar vorangehenden Position versetzt ist, bewegt wird, so dass ein Punkt einer Oberfläche des Polymers in mehreren aufeinanderfolgenden einzelnen Einstrahlvorgängen des Laserlichts innerhalb der jeweils bestrahlten Fläche liegt.

In anderen Worten führt die Vorrichtung die oben mit Bezug zu dem Verfahren beschriebenen Schritte aus. Für Details hierzu wird darauf verwiesen, die Eigenschaften und Effekte der Verfahrensschritte gelten analog für die Funktionen der Vorrichtung.

Die Vorrichtung ist also eingerichtet, einen oder mehrere oben beschriebene Verfahrensschritte auszuführen. Diese werden an dieser Stelle nicht wiederholt.

In einem weiteren Aspekt der Erfindung ist ein Computerprogrammelement angegeben, welches ausgeführt ist, wenn es auf einer Steuereinheit einer hierin beschriebenen Vorrichtung ausgeführt wird, die Vorrichtung so anzusteuern, dass sie die oben beschriebenen Verfahrensschritte ausführt.

Ein Computerprogrammelement enthält Anweisungen an eine Steuereinheit, welche ein Prozessor sein kann. Das Computerprogrammelement kann Vorgaben betreffend die Eigenschaften des Laserstrahls enthalten, also beispielsweise die Bereiche der oben genannten Parameter der Energiedichte, der Wellenlänge, der Frequenz, der Pulsdauer, und der Anzahl der Einstrahlvorgänge pro Punkt auf der Oberfläche des behandelten Werkstücks.

In einem weiteren Aspekt ist ein computerlesbares Medium angegeben, welches das oben genannte Computerprogrammelement aufweist bzw. worauf das Computerprogrammelement gespeichert ist.

Das computerlesbare Medium kann ein nicht-flüchtiger Speicher sein, z.B. eine Diskette, eine Festplatte, ein Flash-Speicher, usw.

Es sei darauf hingewiesen, dass das vorliegende Verfahren und analog die das Verfahren durchführende Vorrichtung auch mit einer Mehrzahl von Laserstrahlquellen, welche einer einzelnen oder einer Mehrzahl von Steuereinheiten zugeordnet sind, durchgeführt werden kann. Der Energieeintrag kann punktuell, entlang einer Linie oder großflächig erfolgen.

Diese und weitere Aspekte der Erfindung werden unter Bezugnahme und mit Verweis auf die folgenden Ausführungen ersichtlich.

### KURZE BESCHREIBUNG DER ZEICHNUNGEN

Nachfolgend wird anhand der beigefügten Zeichnungen näher auf Ausführungsbeispiele der Erfindung eingegangen. Es zeigen:
- Fig. 1: ein Verfahren zum Reinigen von faserverstärkten Kunststoffen;
- Fig. 2.: eine Vorrichtung zum Reinigen von faserverstärkten Kunststoffen;
- Fig. 3.: einen Querschnitt durch einen faserverstärkten Kunststoff; und
- Fig. 4: zeigt beispielhaft sich wiederholende Einstrahlvorgänge von Laserstrahlen auf eine Oberfläche eines faserverstärkten Kunststoffes.

### DETAILLIERTE BESCHREIBUNG VON AUSFÜHRUNGSFORMEN

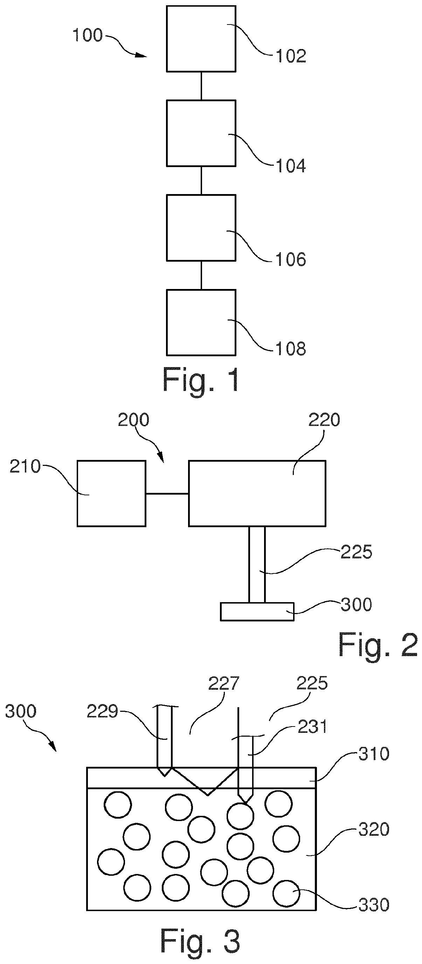

Fig. 1 zeigt ein Verfahren 100 zum Reinigen von faserverstärkten Polymeren 300.

Das Verfahren 100 weist die folgenden Schritte auf. In einem ersten Schritt 102 wird eine Laserstrahlquelle 220 wird zu einer ersten Position des faserverstärkten Polymers 300 bewegt. In einem zweiten Schritt 104 wird Laserlicht 225 aus einer Laserstrahlquelle 220 in eine oberste, Verunreinigungen aufweisende, Schicht 310 des faserverstärkten Polymers 300 eingestrahlt. Die Laserstrahlquelle 220 ist dazu ausgeführt, einen Laserstrahl auf eine erste bestrahlte Fläche mit einer Energiedichte von 0,01 J/cm² bis 2,5 J/cm² zu emittieren.

In einem weiteren Schritt (106) wird die Laserstrahlquelle (220) zu einer zweiten, von der ersten Position abweichenden Position bewegt. Anschließend wird das Einstrahlen von Laserlicht (225) auf eine zweite bestrahlte Fläche wiederholt, wobei die zweite bestrahlte Fläche mit Bezug zu der ersten bestrahlten Fläche versetzt ist und diese zumindest teilweise überlappt.

In einem nächsten Schritt (108) wird das Bewegen der Laserstrahlquelle (220) und das Einstrahlen von Laserlicht (225) wiederholt, wobei die Laserstrahlquelle (220) zu einer weiteren Position, welche zu einer unmittelbar vorangehenden Position versetzt ist und diese zumindest teilweise überlappt, bewegt wird, so dass bei der Wiederholung dieser Schritte ein Punkt einer Oberfläche des Polymers in mehreren aufeinanderfolgenden Einstrahlvorgängen des Laserlichts (225) innerhalb der jeweils bestrahlten Fläche liegt.

Fig. 2 zeigt eine Vorrichtung 200 die dazu ausgeführt ist, einen Laserstrahl zu emittieren. Die Vorrichtung 200 weist dafür eine Steuereinheit 210 und eine Laserstrahlquelle 220 auf.

Die Steuereinheit 210 ist dazu ausgeführt ist, die Laserstrahlquelle 220 anzusteuern um folgende Schritte durchzuführen:
Bewegen 102 einer Laserstrahlquelle 220 zu einer ersten Position des faserverstärkten Polymers 300;
Einstrahlen 104 von Laserlicht 225 aus einer Laserstrahlquelle 220 in eine oberste, Verunreinigungen aufweisende, Schicht 310 des faserverstärkten Polymers 300, wobei die Laserstrahlquelle 220 dazu ausgeführt ist, einen Laserstrahl auf eine erste bestrahlte Fläche mit einer Energiedichte von 0,01 J/cm² bis 2,5 J/cm² zu emittieren;
Bewegen 106 der Laserstrahlquelle (220) zu einer zweiten, von der ersten Position abweichenden Position und Wiederholen des Einstrahlens von Laserlicht (225) auf eine zweite bestrahlte Fläche, wobei die zweite bestrahlte Fläche mit Bezug zu der ersten bestrahlten Fläche versetzt ist und diese zumindest teilweise überlappt;
Wiederholen 108 des Bewegens der Laserstrahlquelle (220) und des Einstrahlens von Laserlicht (225), wobei die Laserstrahlquelle (220) zu einer weiteren Position, welche zu einer unmittelbar vorangehenden Position versetzt ist und diese zumindest teilweise überlappt, bewegt wird, so dass bei der Wiederholung dieser Schritte ein Punkt einer Oberfläche des Polymers in mehreren aufeinanderfolgenden Einstrahlvorgängen des Laserlichts (225) innerhalb der jeweils bestrahlten Fläche liegt.

In einem Ausführungsbeispiel weist die Laserstrahlquelle Parameter aus folgenden Bereichen auf:

| | |
|---|---|
| Energiedichte in J/cm²: | 0,01 bis 2,5 |
| Anzahl der Pulse: | 2 bis 150 |
| Wellenlänge in nm: | 150 bis 320 |
| Frequenz in Hz: | 50 bis 30.000 |
| Pulsdauer in ns: | 10 bis 20 |

In einem bevorzugten Ausführungsbeispiel weist die Laserstrahlquelle Parameter aus folgenden Bereichen auf:

| | |
|---|---|
| Energiedichte in J/cm²: | 0,01 bis 2 |
| Anzahl der Pulse: | 10 bis 100 |
| Wellenlänge in nm: | 150 bis 280 |
| Frequenz in Hz: | 5000 bis 30.000 |
| Pulsdauer in ns: | 12 bis 20 |

In einem weiter bevorzugten Ausführungsbeispiel weist die Laserstrahlquelle Parameter aus folgenden Bereichen auf:

| | |
|---|---|
| Energiedichte in J/cm²: | 0,01 bis 1,5 |
| Anzahl der Pulse: | 50 bis 90 |
| Wellenlänge in nm: | 200 bis 270 |
| Frequenz in Hz: | 10.000 bis 30.000 |
| Pulsdauer in ns: | 14 bis 20 |

In einem weiter bevorzugten Ausführungsbeispiel weist die Laserstrahlquelle Parameter aus folgenden Bereichen auf:

| | |
|---|---|
| Energiedichte in J/cm²: | 0,01 bis 0,05 |
| Anzahl der Pulse: | 60 bis 80 |
| Wellenlänge in nm: | 240 bis 270 |
| Frequenz in Hz: | 20.000 bis 30.000 |
| Pulsdauer in ns: | 16 bis 20 |

In einem noch weiter bevorzugten Ausführungsbeispiel weist die Laserstrahlquelle folgende Parameter auf:

| | |
|---|---|
| Energiedichte in J/cm²: | 0,15 |
| Anzahl der Pulse: | 70 |
| Wellenlänge in nm: | 240 bis 250 oder 266 |
| Frequenz in Hz: | 30.000 |
| Pulsdauer in ns: | 20 |

Fig. 3 zeigt einen Querschnitt durch ein faserverstärktes Polymer 300. Das Laserlicht 225 wird zum größten Teil 227 vom Polymer 320 absorbiert. Die Verunreinigungen aufweisende Schicht 310 absorbiert einen nur geringen Absorptionsanteil 229. Die unidirektional angeordneten Fasern 330 (diese verlaufen aus der Zeichenebene heraus bzw. in diese hinein) absorbieren ebenfalls nur einen kleinen Teil 231. Der emittierte Laserstrahl wird in Fig. 3 als Zusammensetzung der Anteile 227, 229, 231 dargestellt. In einer nicht gezeigten Konsequenz, kommt es zu einem Abplatzen der Verunreinigungen aufweisenden Schicht 310, da sich die eingetragene thermische Energie in dem Zwischenbereich verunreinigtes - reines Polymer (also an dem Übergang von Schicht bzw. Bereich 310 zu Bereich 320) akkumuliert und zu einem Ausdehnen des Polymers als Ergebnis der lokalen Zufuhr von Energie führt.

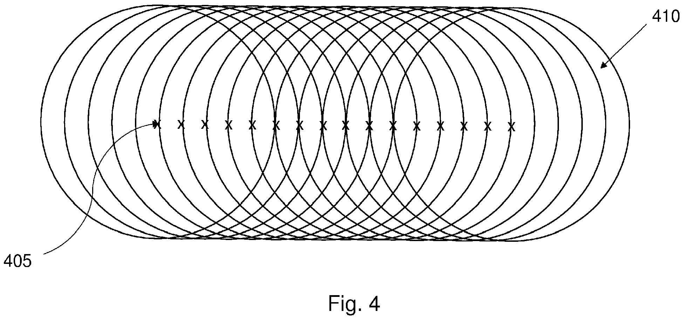

Fig. 4 zeigt schematisch den Bewegungsablauf eines Laserstrahls mit Bezug zu der Oberfläche des zu behandelnden Werkstücks (also des faserverstärkten Polymers 300) mittels mehreren zueinander versetzten bestrahlten Flächen 410. Es ist zu erkennen, dass ein Punkt 405 der Oberfläche des Werkstücks 300 (siehe Fig. 2) von mehreren Einstrahlvorgängen des Laserstrahls bestrahlt wird, weil der seitliche Versatz zwischen zwei Einstrahlvorgängen geringer ist als eine Ausdehnung des Laserstrahls bzw. der bestrahlten Fläche auf der Oberfläche des Polymers 300. Insbesondere ist die Größe der bestrahlten Fläche und das Ausmaß des seitlichen Versatzes so bemessen, dass eine gewünschte Anzahl von Laserstrahleinwirkungen pro Punkt 405 der Oberfläche des Polymers erreicht wird.

Fig. 4 zeigt exemplarisch mehrere Einstrahlvorgänge, die seitlich zueinander versetzt sind. Dies kann als Zeile bezeichnet werden. Jedenfalls kann ein Werkstück bevorzugt so behandelt werden, dass mehrere Zeilen auf der Oberfläche abgefahren werden. Diese Zeilen sind prinzipiell identisch oder ähnlich zu derjenigen, die in Fig. 4 gezeigt ist. Jedoch weisen die Zeilen zueinander einen vertikalen Versatz (im Gegensatz zu einem horizontalen Versatz zwischen einzelnen Einstrahlvorgängen in einer Zeile) auf. Für den vertikalen Versatz gelten ähnliche Ausführungen wie mit Bezug zu dem horizontalen Versatz innerhalb einer Zeile schon dargelegt, d.h., dass die zweite Zeile um einen Betrag nach unten (oder oben) versetzt ist, der geringer ist, als die vertikale Ausdehnung einer Zeile.

Werden mehrere Zeilen abgefahren, können diese entweder alle an einer Seite des Werkstücks beginnen und seitlich zu der gegenüberliegenden Seite aufgetragen werden (vergleichbar zu dem Schreibvorgang auf einem Blatt Papier, beginne links oder rechts und fülle auf nach rechts bzw. links), oder die Zeilen werden serpentinenartig aufgetragen, d.h. die erste Zeile beginnt links (oder rechts) und endet rechts (oder links) und bei der zweiten Zeile ist es umgekehrt. Die letztere Variante hat den Vorteil, dass der Laser am Ende einer Zeile nicht zurückfahren muss, sondern den Einstrahlvorgang in der nächsten Zeile dort beginnen kann, wo er sich sowieso schon befindet.

Der Vollständigkeit halber wird darauf hingewiesen, dass in einem alternativen Beispiel auch mehrere Einstrahlvorgänge ohne dazwischenliegende Bewegungen des Lasers auf die gleiche bestrahlte Fläche erfolgen können.

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Verfahren
- 102: Bewegen des Lasers über eine erste Position
- 104: Einstrahlen von Laserlicht, einzelner Puls
- 106: Wiederholen des Einstrahlvorgangs
- 108: Bewegen des Lasers zu einer zweiten Position
- 200: Vorrichtung
- 210: Steuereinheit
- 220: Laserstrahlquelle
- 225: Laserlicht, Laserstrahl
- 227: Anteil des vom Polymer absorbierten Lichts
- 229: Anteil des von der Verunreinigungen aufweisenden Schicht absorbierten Lichts
- 231: Anteil des von der Faser absorbierten Lichts
- 300: Faserverstärktes Polymer
- 310: Verunreinigungen aufweisende Schicht
- 320: Polymer, Matrix
- 330: Faser, Filament
- 405: Oberflächenpunkt auf dem zu behandelnden Werkstück
- 410: bestrahlte Fläche

## Patentansprüche

1. Ein Verfahren (100) zum Reinigen von faserverstärkten Polymeren (300) mittels Laserstrahlung, das die folgenden Schritte aufweist:
Einstrahlen (104) von Laserlicht (225) aus einer Laserstrahlquelle (220) in eine oberste, Verunreinigungen aufweisende, Schicht (310) des faserverstärkten Polymers (300), wobei die Laserstrahlquelle (220) dazu ausgeführt ist, einen Laserstrahl an einer ersten Position auf eine erste bestrahlte Fläche mit einer Energiedichte von 0,01 J/cm² bis 2,5 J/cm² zu emittieren;
Bewegen der Laserstrahlquelle (220) zu einer zweiten, von der ersten Position abweichenden Position und Wiederholen des Einstrahlens von Laserlicht (225) auf eine zweite bestrahlte Fläche, wobei die zweite bestrahlte Fläche mit Bezug zu der ersten bestrahlten Fläche versetzt ist;
Wiederholen des Bewegens der Laserstrahlquelle (220) und des Einstrahlens von Laserlicht (225), wobei die Laserstrahlquelle (220) zu einer weiteren Position, welche zu einer unmittelbar vorangehenden Position versetzt ist, bewegt wird, so dass ein Punkt einer Oberfläche des Polymers in mehreren aufeinanderfolgenden einzelnen Einstrahlvorgängen des Laserlichts (225) innerhalb der jeweils bestrahlten Fläche liegt.

2. Verfahren (100) nach Anspruch 1,
wobei die zweite bestrahlte Fläche die erste bestrahlte Fläche zumindest teilweise überlappt und wobei die an der weiteren Position bestrahlte Fläche die an der unmittelbar vorangehenden Position bestrahlte Fläche zumindest teilweise überlappt.

3. Verfahren (100) nach Anspruch 1 oder 2,
wobei das Laserlicht (225) mit einer Wellenlänge von 150 nm bis 320 nm eingestrahlt wird; und/oder
wobei das Wiederholen (106) des Einstrahlvorgangs des Laserlichts (225) mit einer Frequenz von 50 Hz bis 30 kHz erfolgt.

4. Verfahren (100) nach einem der vorhergehenden Ansprüche,
wobei ein einzelner Einstrahlvorgang eine Dauer von bis zu 20 ns aufweist.

5. Verfahren (100) nach einem der vorhergehenden Ansprüche,
wobei der Punkt der Oberfläche des Polymers in mehreren aufeinanderfolgenden Einstrahlvorgängen des Laserlichts insgesamt zwischen 2 und 150 mal, bevorzugt zwischen 50 und 90 mal, von dem Laserlicht bestrahlt wird.

6. Verfahren (100) nach einem der vorhergehenden Ansprüche,
aufweisend den weiteren Schritt:
Bestimmen der Energiedichte und der Anzahl der Wiederholungen des Einstrahlvorgangs des Laserlichts (225) in Abhängigkeit eines Verunreinigungsgrads der obersten Verunreinigungen aufweisende, Schicht (310) des faserverstärkten Polymers (300).

7. Verfahren (100) nach einem der vorhergehenden Ansprüche,
wobei der Laserstrahl mehrfach auf die an der ersten Position bestrahlte Fläche eingestrahlt wird, bevor die Laserstrahlquelle von der ersten Position zu der zweiten Position bewegt wird.

8. Eine Vorrichtung (200) zum Emittieren eines Laserstrahls, aufweisend:
eine Steuereinheit (210);
eine Laserstrahlquelle (225);
wobei die Steuereinheit (210) dazu ausgeführt ist, die Laserstrahlquelle (225) anzusteuern um folgende Schritte durchzuführen:
Einstrahlen (104) von Laserlicht (225) aus einer Laserstrahlquelle (220) in eine oberste, Verunreinigungen aufweisende, Schicht (310) des faserverstärkten Polymers (300), wobei die Laserstrahlquelle (220) dazu ausgeführt ist, einen Laserstrahl an einer ersten Position auf eine erste bestrahlte Fläche mit einer Energiedichte von 0,01 J/cm² bis 2,5 J/cm² zu emittieren;
Bewegen (106) der Laserstrahlquelle (220) zu einer zweiten, von der ersten Position abweichenden Position und Wiederholen des Einstrahlens von Laserlicht (225) auf eine zweite bestrahlte Fläche, wobei die zweite bestrahlte Fläche mit Bezug zu der ersten bestrahlten Fläche versetzt ist;
Wiederholen (108) des Bewegens der Laserstrahlquelle (220) und des Einstrahlens von Laserlicht (225), wobei die Laserstrahlquelle (220) zu einer weiteren Position, welche zu einer unmittelbar vorangehenden Position versetzt ist, bewegt wird, so dass ein Punkt einer Oberfläche des Polymers in mehreren aufeinanderfolgenden einzelnen Einstrahlvorgängen des Laserlichts (225) innerhalb der jeweils bestrahlten Fläche liegt.

9. Vorrichtung nach Anspruch 8,
wobei die Steuereinheit (210) dazu ausgeführt ist, die Laserstrahlquelle (225) so zu bewegen, dass die zweite bestrahlte Fläche die erste bestrahlte Fläche zumindest teilweise überlappt und dass die an der weiteren Position bestrahlte Fläche die an der unmittelbar vorangehenden Position bestrahlte Fläche zumindest teilweise überlappt.

10. Vorrichtung (200) nach Anspruch 8 oder 9,
wobei die Steuereinheit (210) dazu ausgeführt ist, das Laserlicht (225) mit einer Wellenlänge von 150 nm bis 320 nm einzustrahlen; und/oder
wobei die Steuereinheit (210) dazu ausgeführt ist, den Einstrahlvorgang des Laserlichts (225) mit einer Frequenz von 50 Hz bis 30 kHz zu wiederholen.

11. Vorrichtung (200) nach einem der Ansprüche 8 bis 10,
wobei die Steuereinheit (210) dazu ausgeführt ist, einen einzelnen Einstrahlvorgang über eine Dauer von bis zu 20 ns durchzuführen.

12. Vorrichtung (200) nach einem der Ansprüche 8 bis 11,
wobei die Steuereinheit (210) dazu ausgeführt ist, das Wiederholen des Einstrahlvorgangs des Laserlichts (225) so vorzunehmen, dass der Punkt der Oberfläche des Polymers in mehreren aufeinanderfolgenden Einstrahlvorgängen des Laserlichts insgesamt zwischen 2 und 150 mal, bevorzugt zwischen 50 und 90 mal, von dem Laserlicht bestrahlt wird.

13. Vorrichtung (200) nach einem der Ansprüche 8 bis 12,
wobei die Steuereinheit (210) dazu ausgeführt ist, die Energiedichte und die Anzahl der Wiederholungen des Einstrahlvorgangs des Laserlichts (225) in Abhängigkeit eines Verunreinigungsgrads der obersten Schicht zu bestimmen.

14. Ein Computerprogrammelement zum Steuern einer Vorrichtung nach einem der Ansprüche 8 bis 13, wobei das Computerprogrammelement ausgeführt ist, eine Steuereinheit der Vorrichtung anzuweisen, die Verfahrensschritte gemäß einem der Ansprüche 1 bis 7 auszuführen, wenn das Computerprogrammelement ausgeführt wird.

15. Ein computerlesbares Medium, auf welchem das Computerprogrammelement des Anspruchs 14 gespeichert ist.
